# DEMANDE DE BREVET EUROPEEN

(11) **EP 0 666 025 A1**
(43) Date de publication de la demande: **09.08.1995**
(21) Numéro de dépôt: 95460004.5
(22) Date de dépôt: 07.02.1995
(51) Int. Cl.: A01K 5/02, A01F 25/20

(54) **Benne réceptrice et distributrice de produits en vrac**

(30) Priorité: 08.02.1994 FR 9401607
(71) Demandeur: Mailleux, André Ange, F-35690 Acigné (FR); Mailleux, Louis Marie Joseph, F-35530 Noyal-Sur-Vilaine (FR)
(72) Inventeur: Mailleux, André Ange, F-35690 Acigné (FR); Mailleux, Louis Marie Joseph, F-35530 Noyal-Sur-Vilaine (FR)
(74) Mandataire: Le Faou, Daniel

(57) **Abrégé**

Cette benne (1), dont le fond (10) est équipé d'une vis d'Archimède (2) animé par un moteur hydraulique (5) à double sens de rotation, apte à entraîner les produits latéralement et les extraire de la benne à travers une ouverture (15) ménagée dans l'une (14) de ses faces latérales, est remarquable en ce qu'elle comprend une trappe (3) d'obturation de ladite ouverture (15), cette trappe consistant en un volet coulissant dont la course d'ouverture est réglable, et étant également commandée par des moyens hydrauliques (6), les circuits hydrauliques alimentant le moteur (5) et les moyens (6) de commande de la trappe étant asservis l'un à l'autre de telle sorte que l'actionnement de la vis (2) dans le sens du déchargement provoque automatiquement l'ouverture de la trappe (3), tandis que son actionnement en sens inverse en provoque la fermeture.

Dessilage et distribution de produits en vrac, notamment d'aliments pour bétail.

## Description

La présente invention concerne une benne réceptrice et distributrice de produits en vrac, notamment de produits alimentaires pour le bétail.

Ce type de benne est traditionnellement monté sur un chargeur porté par un tracteur agricole ou est monté à l'arrière du tracteur sur le système d'attelage dit "trois points" de celui-ci, et sert à transférer les aliments pour animaux d'un lieu de stockage tel qu'un silo à une auge.

Les aliments à distribuer peuvent être de nature et de consistance très variées. Il peut s'agir notamment de grains (céréales), de granulés, de matières fibreuses (herbe et fourrage), de végétaux entiers ou concassés.

L'invention concerne plus particulièrement une benne dont le fond est équipé d'une vis d'Archimède qui est animée par un moteur hydraulique et qui sert à entraîner les produits latéralement et les décharger hors de la benne à travers une ouverture ménagée dans l'une des faces latérales de la benne. Cet agencement permet de déverser régulièrement le produit le long de l'auge réceptrice, en mettant en oeuvre les mouvements conjugués d'avance du tracteur (le long de l'auge) et extraction latérale de produits hors de la benne.

Dans les dispositifs connus, l'ouverture de distribution prévue dans l'une des faces latérales de la benne est normalement obturée par une bavette souple.

Un dispositif de ce genre, dont la vis d'Archimède est entraînée mécaniquement, est décrit par exemple dans le document FR-A-2 399 373.

L'une des parois latérales de la benne est partiellement constituée par une tôle et, en face de la vis, par des pans de feuilles assez rigides pour empêcher le produit de s'écouler quand la vis ne tourne pas, c'est-à-dire pendant le transport, mais assez souples pour laisser le passage au produit quand celui-ci est poussé par l'action de la vis.

Un premier inconvénient de ce dispositif connu est que l'opérateur n'a pas la possibilité de contrôler la section de passage des produits à travers l'ouverture latérale de la benne, alors que la section optimale dépend de la nature des produits. En effet, pour des matériaux pulvérulents ou granulaires de faible granulométrie, une faible section de passage est recherchée pour permettre un écoulement contrôlé du produit. Une section trop grande risque de provoquer un écoulement irrégulier, par "paquets" des produits. Au contraire, pour des produits fibreux tels que des fourrages, une grande section de passage est souhaitée.

Un autre inconvénient des dispositifs connus résulte de la mauvaise étanchéité de la benne, liée à la déformabilité de la bavette obturatrice. Il est important en effet que, lorsque la vis n'est pas actionnée, les produits ne s'échappent pas inopinément de la benne, notamment lors de son déplacement du lieu de stockage à l'auge, ainsi qu'en période de non utilisation, lorsque les produits restent stockés à l'intérieur de la benne. Avec des produits fluides et présentant une faible granulométrie, il y a un risque de fuite d'une certaine quantité des produits hors de la benne.

L'invention vise à résoudre ces problèmes en proposant une benne du genre ci-dessus mentionné, dans lequel la section de passage du matériau à travers l'ouverture distributrice latérale de la benne puisse être modifiée par l'opérateur et adaptée à la nature du produit concerné, tout en évitant le problème de fuite qui vient d'être évoqué.

Ainsi, l'objectif principal de l'invention est de proposer un dispositif polyvalent, c'est-à-dire adapté à une bonne distribution d'aliments pour animaux pouvant être de nature et de consistance (notamment de granulométrie) très variées.

Un autre objectif de l'invention est de proposer un dispositif dans lequel la fermeture de la trappe obturant la benne soit totale et sûre, empêchant toute fuite des aliments en cours de transport.

Un autre objectif de l'invention est de proposer un dispositif qui ne nécessite pas de commande spéciale de la part de l'opérateur.

Un autre objectif, enfin, est de proposer un dispositif peu coûteux, notamment ne nécessitant pas la présence d'une valve hydraulique supplémentaire (dont le coût est relativement élevé) par rapport au circuit hydraulique déjà utilisé pour la commande du moteur hydraulique entraînant la vis d'Archimède équipant la benne.

On connaît par ailleurs, par le document FR-A-2 634 345, une machine à distribuer des fourrages (dessileuse) comprenant un tapis mobile, à entraînement hydraulique, monté au fond d'un conteneur et associé à une goulotte distributrice articulée. Cette dernière peut pivoter entre deux positions extrêmes, l'une de fermeture, et l'autre d'ouverture, le pivotement étant asservi au sens d'entraînement du tapis.

Une telle machine est exclusivement adaptée à la distribution de produits fibreux. Il ne serait pas possible d'y contrôler l'écoulement de produits fluides tels que des granulés, qui sortiraient automatiquement par gravité hors du conteneur lorsque la goulotte est en position ouverte.

La benne réceptrice et distributrice de produits en vrac qui fait l'objet de la présente invention possède un fond équipé d'une vis d'Archimède animée par un moteur hydraulique à double sens de rotation apte à entraîner les produits latéralement et les décharger hors de la benne à travers une ouverture ménagée dans l'une de ses faces latérales.

Les résultats visés, indiqués ci-dessus, sont obtenus grâce au fait que la benne comporte une trappe d'obturation de ladite ouverture, qui consiste en un volet qui est monté coulissant dans le plan (ou sensiblement dans le plan) de ladite face latérale de la benne, et dont la course d'ouverture est réglable, cette trappe étant également commandée par des moyens hydrauliques, et que les circuits hydrauliques alimentant ledit moteur et lesdits moyens de commande de la trappe sont asservis l'un à l'autre de telle sorte que l'actionnement de la vis dans le sens du déchargement provoque automatiquement l'ouverture de la trappe, tandis que l'actionnement de la vis en sens inverse en provoque la fermeture.

Il s'agit donc d'une trappe de type "à guillotine" dont le volet coulissant peut cisailler la masse de produit se trouvant dans l'ouverture du sortie de la benne si on ferme la trappe alors que la benne n'est pas complètement vide (distribution partielle). Cette action de cisaillage des matières assure une fermeture sûre et totale du volet.

De plus, il est facile d'adapter le dispositif à la nature du produit en réglant la course d'ouverture de la trappe. Ainsi, pour un produit fibreux ou collant on adoptera une course importante, offrant au produit une grande section de passage.

Au contraire, pour un produit fluide - granulaire ou pulvérulent - on limitera cette course d'autant plus que le produit est fluide, pour réduire la section de passage et empêcher un écoulement incontrôlé.

Selon une caractéristique avantageuse, les conduits hydrauliques alimentant le moteur et les moyens de commande de trappe sont pilotés par une même et unique valve à trois positions.

Dans un mode de réalisation préférentiel, les moyens de commande de la trappe consistent en un vérin hydraulique à double effet.

Selon une caractéristique additionnelle intéressante, l'un des conduits hydrauliques alimentant le moteur comporte une valve à étranglement unidirectionnelle apte à engendrer une augmentation de la pression de commande du vérin, dans le sens de la fermeture de la trappe, lors de l'actionnement de la vis en sens inverse de celui du déchargement.

Dans un mode de réalisation possible, la benne comporte en outre une goulotte de déversement télescopique, extensible latéralement, pour prolonger le fond de la benne du côté de l'ouverture de déchargement latéral, à l'extérieur de celle-ci, la commande de la goulotte dans le sens de l'extension étant asservie à l'ouverture de la trappe, et inversement.

Dans un mode de réalisation possible, la commande de la goulotte est réalisée mécaniquement, par des organes de transmission de mouvement reliés aux organes d'actionnement de la trappe.

Dans un autre mode de réalisation possible, la goulotte est commandée par un vérin hydraulique alimenté par le circuit hydraulique commandant la trappe, ce vérin étant distinct du vérin de commande de la trappe.

D'autres caractéristiques et avantages de l'invention apparaîtront de la description et des dessins annexés qui en représentent des modes de réalisation préférentiels.

Sur ces dessins :
- la figure 1 est une vue générale schématique et en perspective d'une benne conforme à l'invention ;
- la figure 2 est une vue de face d'un premier mode de réalisation possible de la benne, sur laquelle le circuit hydraulique de commande a été représenté de manière schématique ;
- les figures 2A et 2B sont des schémas d'une valve d'étranglement unidirectionnelle équipant le circuit, dans deux états différents ;
- les figures 3A et 3B sont des schémas montrant deux états différents de la valve à trois positions équipant ce circuit ;
- la figure 4 est une vue en bout de la benne, du côté de l'extrémité par laquelle se fait le déchargement, la trappe étant en position fermée ;
- la figure 4A est une vue similaire à celle de la figure 4, trappe partiellement ouverte ;
- la figure 5 est une vue analogue à la figure 2, représentant un second mode de réalisation de la benne.

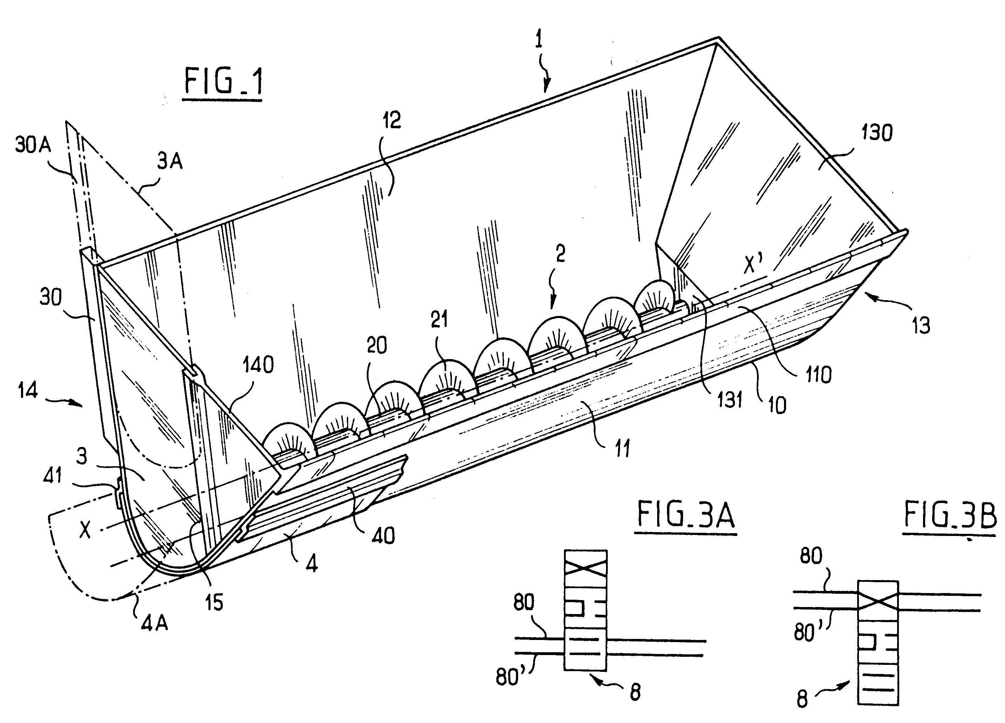

La benne 1 représentée très schématiquement à la figure 1 a la forme générale d'une trémie en métal ayant des faces (ou cloisons) avant 11 et arrière 12 formant un dièdre et se raccordant l'une à l'autre par un fond semi-cylindrique 10. Les faces (ou cloisons) latérales sont disposées verticalement et désignées par les références 13 et 14.

De manière bien connue, la face avant 11 présente un bord renforcé 110. Ce bord pénètre dans la masse du produit au cours de son prélèvement.

Des ferrures non représentées prévues au dos de la face arrière 12 permettent le montage de la benne sur le chargeur d'un tracteur agricole, comme cela est bien connu.

De manière également connue, le fond de la benne est équipé d'une vis d'Archimède 2 s'étendant de la face 13 à la face 14, selon un axe transversal XX' coïncidant avec l'axe du fond semi-cylindrique 10.

L'arbre et le filet de la vis 2 sont référencés respectivement 20 et 21.

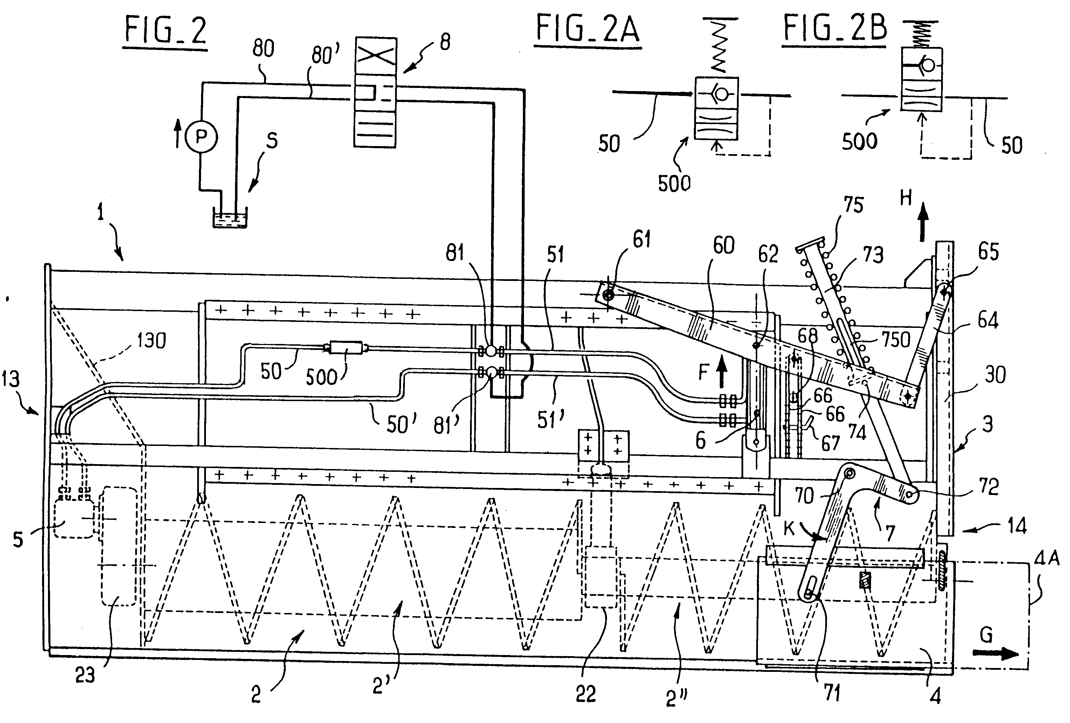

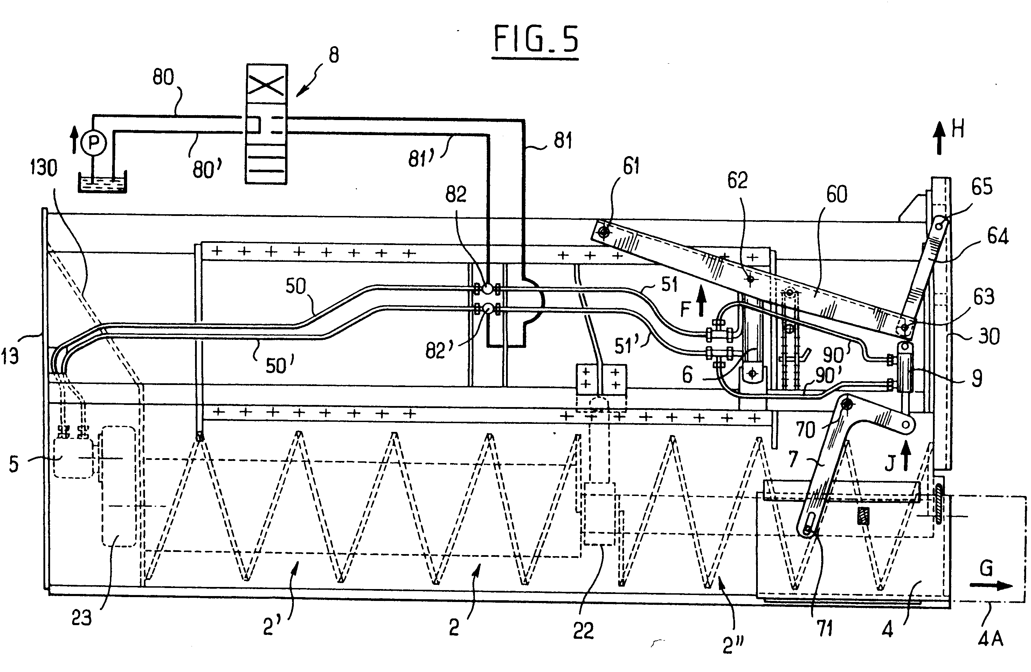

La vis est entraînée en rotation par un moteur hydraulique à double sens de rotation, qui est installé à l'extérieur de la benne, dans le prolongement de l'arbre, du côté de la face 13. Ce moteur, non visible à la figure 1, est référencé 5 sur les figures 2 et 5.

A cet effet, la partie supérieure 130 de la face 13 est inclinée de bas en haut vers l'intérieur, tandis que sa portion basse 131, qui reçoit le palier de guidage de la vis, est verticale.

Ce décrochement vers l'intérieur de la face latérale 13 ménage ainsi à l'extérieur et en-dessous de la partie 130 un espace permettant de loger le moteur hydraulique. La vis est guidée en rotation dans des paliers appropriés non représentés.

Conformément à l'invention, la face latérale 14 est composée d'une cloison fixe 140 et d'une trappe mobile, ou volet 3.

Il s'agit d'une plaque dont les bords avant et arrière sont parallèles et dont le bord inférieur présente un contour arqué complémentaire du fond de benne, contre lequel il vient s'appliquer intimement - de manière étanche aux produits - en position de fermeture.

Le volet 3 peut coulisser verticalement, dans le plan de la face 14, à la manière d'une lame de guillotine.

Le bord supérieur de cette plaque est tel que, lorsque la trappe est fermée, il vient au même niveau que le bord supérieur de la cloison 140.

Le bord avant de la plaque 3 est guidé dans une rainure appropriée ménagée dans la cloison 140.

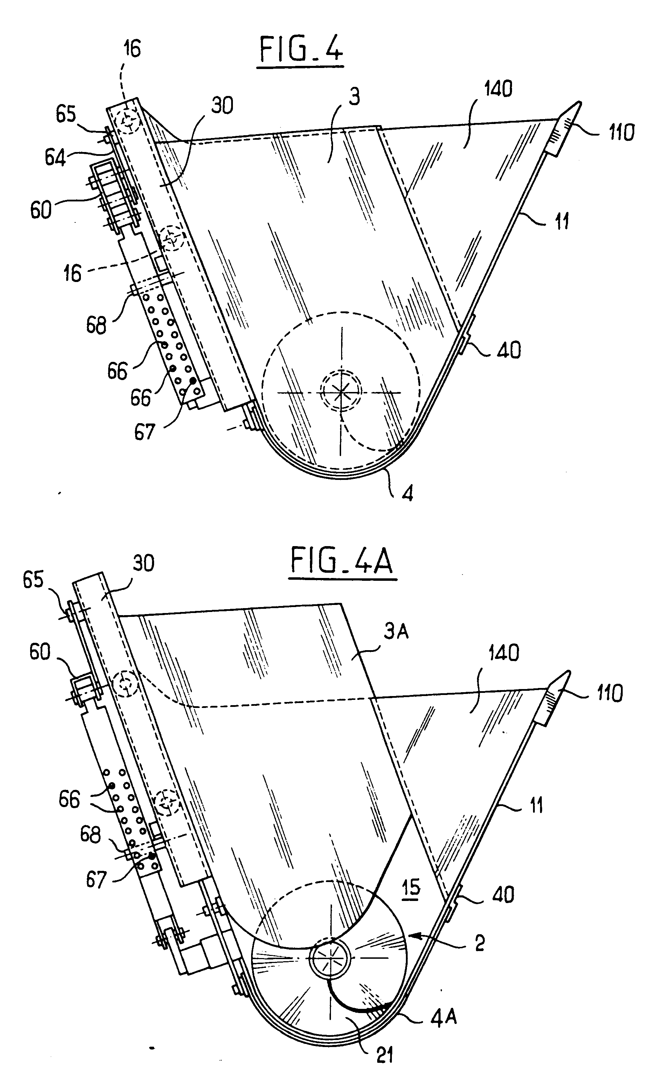

Son bord arrière est solidaire d'un profilé 30, schématiquement représenté à la figure 1. Il s'agit d'un profilé en "U" guidé en translation sur les galets fous en rotation, solidaires de la face arrière 12 de la benne (voir figure 4).

Dans sa position basse, représentée à la figure 4, et en traits forts à la figure 1, la trappe et la cloison 140 constituent une cloison obturant complètement cette extrémité latérale de la benne, et par conséquent empêchant tout échappement des produits contenus dans la benne.

En revanche, lorsque la trappe - référencée alors 3A - est soulevée, comme illustrée à la figure 4A et en traits mixtes à la figure 1, elle libère entre la paroi arrière 12 et la cloison 140 une ouverture 15 qui autorise l'échappement latéral des produits contenus dans la benne.

Cette benne est par ailleurs équipée d'une goulotte 4, de forme semi-cylindrique s'adaptant à celle du fond 10, et de longueur limitée (par rapport à celle de la benne). La goulotte 4 se trouve à l'extérieur de la benne, intimement appliquée contre le fond 10, du côté de la face 14 par laquelle se fait la distribution du produit.

La goulotte 4 est guidée en translation dans des guides 40, 41, et peut coulisser transversalement, parallèlement à XX'.

Dans sa position rétractée, illustrée en trait fort à la figure 1, la goulotte ne dépasse pas l'extérieur de la face 14, et reste donc dans le gabarit de la benne, si bien qu'elle n'est pas gênante pour les manipulations et les déplacements de la benne et du tracteur.

Dans sa position d'extension, illustrée en traits mixtes et référencée 4A à la figure 1, la goulotte déborde vers l'extérieur, permettant ainsi de soutenir et de guider le produit au cours de son déchargement à travers l'ouverture 15 (trappe ouverte et vis en marche) pour la déverser dans l'auge.

Nous allons maintenant décrire, en nous référant plus particulièrement aux figures 2 et 4, les moyens de commande de la trappe 3 dans ses mouvements d'ouverture et de fermeture, et de la goulotte 4 dans ses mouvements d'extension et de rétraction.

Dans la forme de réalisation représentée à la figure 2, la vis 2 comprend deux portions 2', 2'' qui ont des diamètres d'arbre différents, la portion amont ayant un diamètre plus grand que la portion aval. Cette configuration de vis, qui permet une distribution plus régulière du produit, ne fait pas à proprement parler partie de la présente invention.

On a désigné par la référence 22 un palier intermédiaire de guidage en rotation de la vis, ce palier étant positionné entre les deux portions 2' et 2''.

La vis est entraînée en rotation, dans un sens ou dans l'autre, par un moteur hydraulique à double sens de rotation 5, par l'intermédiaire d'un réducteur 23. L'alimentation en liquide hydraulique du moteur 5 se fait par deux conduits 50, 50', à partir d'un circuit qui sera décrit plus loin.

Sur le conduit 50 peut être montée (optionnellement) une valve d'étranglement unidirectionnelle 500, dont le rôle sera expliqué plus loin.

L'ensemble des conduits et mécanismes de commande du moteur 5, de la trappe 3 et de la goulotte 4 se trouvent au dos de la face arrière 12, et ne sont donc pas exposés au milieu extérieur, et notamment aux contacts avec les produits prélevés par la benne. Bien entendu, il est possible de prévoir un carter de protection de ces tuyauteries et mécanismes.

Le mécanisme de commande de la trappe 3 comprend essentiellement un levier pivotant 60 et une bielle 64.

Ces éléments constituent les deux côtés d'un triangle déformable s'étendant dans un plan transversal, perpendiculaire au plan de la trappe 3.

Le levier 60 et la bielle 64 sont articulés l'un à l'autre à l'une de leurs extrémités. Par son autre extrémité, le levier 60 s'articule sur un tourillon 61 solidaire de la benne, tandis que la bielle 64 s'articule sur un tourillon 65 solidaire du profilé 30 constituant le bord arrière de la trappe 3.

Le pivotement du levier 60 est commandé par un vérin hydraulique à double effet 6 dont le corps est monté, de manière articulée, sur la benne, tandis que l'extrémité de sa tige est fixée par un tourillon 62 en une zone centrale du levier 60.

A la simple observation de la figure 2, on comprend que lors de l'extension du vérin 6, symbolisée par la flèche **F**, ce mouvement va être transmis par le levier 60 et la bielle 64 à la trappe 3, qui va se soulever (flèche **H**).

Selon une caractéristique de l'invention, l'amplitude de ce mouvement peut être contrôlée.

Pour cela, le mécanisme comprend une paire de tige plates 66 parallèles l'une à l'autre et placées à faible distance l'une de l'autre. Elles sont articulées à leur extrémité haute au levier 60. Leurs grandes faces se trouvent dans un plan parallèle à celui de la trappe 3. Dans chaque tige 66 est percée une série de trous qui s'échelonnent en quinconce sur deux rangées, chaque trou d'une tige 66 ayant un trou en vis-à-vis dans l'autre tige.

Il est ainsi possible de relier les deux tiges par une barrette 67 s'insérant dans deux trous en regard, qui ont été sélectionnés. Entre les deux tiges, dans leur région supérieure (qui n'est pas percée de trous) est positionnée une butée fixe - c'est-à-dire solidaire de la benne - 68.

On comprend donc que l'amplitude de pivotement du levier 60, dans le sens de la flèche **F**, est limité, la barrette 7 venant rencontrer la butée fixe 68 après une certaine course. Cette amplitude peut être réglée par l'opérateur, en fonction de la position de la barrette 67 dans la série de trous 66.

Ainsi, il est facile de régler la course d'ouverture maximale du volet, pour ajuster la section de sortie du produit à sa nature et à sa fluidité.

Dans le mode de réalisation illustré à la figure 2, le levier pivotant 60 sert également à commander le mouvement de la goulotte 4.

Le mécanisme de commande comprend un levier coudé 7 articulé à la benne, en sa zone centrale coudée, par un tourillon 70. A l'une de ses extrémités, le levier 7 présente une lumière dans laquelle pénètre un doigt 71 solidaire de la goulotte 4. La présence de la lumière est nécessitée par le fait que l'extrémité libre du levier 7 décrit un arc de cercle, tandis que le tourillon 71 décrit un mouvement rectiligne.

L'autre extrémité du levier 7 est articulée par un tourillon 72 sur une tige mobile 73. Celle-ci présente une lumière longitudinale 750 traversée par un doigt 74 solidaire du levier 60.

Un ressort de compression 75 entourant la tige 73 agit contre le doigt 74 de manière à le maintenir normalement contre l'extrémité basse de la lumière 750.

L'agencement est tel que lorsque le vérin 6 est en position rétractée et que, par conséquent le levier 60 se trouve abaissé (trappe fermée) la goulotte 4 est rétractée (position de la figure 2).

On comprend, en observant la figure 2, que lorsque le levier 60 pivote vers le haut (flèche **F**) il fait pivoter - par l'intermédiaire du doigt 74, du ressort 75 et de la tige 73 - le levier coudé 7 dans le sens **K** autour du tourillon 70, ce qui provoque l'extension de la goulotte (position 4A - flèche **G**).

La disposition et les dimensions des différents éléments qui transmettent le mouvement du levier 60 à la goulotte 4 sont déterminés de telle façon qu'ils réalisent une extension complète de la goulotte, même lorsque la course d'ouverture de la trappe est réglée au minimum. Pour une ouverture plus grande, l'excédent de course du levier 60 va être compensée par la compression du ressort 75. La présence de ce dernier est également utile dans l'hypothèse où l'extension de la goulotte se trouve contrariée, par exemple par un obstacle, car le mouvement vers le haut du levier 60 - et corrélativement l'ouverture de la trappe - peut malgré tout se poursuivre.

Le vérin à double effet 6 est alimenté en liquide hydraulique par des conduits 51, 51' à partir de la même source hydraulique **S** que celle qui alimente le moteur 5.

Dans le cas d'une application de dessilage sur tracteur agricole, cette source de pression hydraulique est produite et portée par le tracteur.

A la figure 2, on a désigné par les références 80, 80' les conduits provenant de la source hydraulique. De manière connue, ils portent une valve à trois positions 8. Ce type de valve, traditionnellement appelée "distributeur hydraulique" équipe couramment les tracteurs agricoles. Ces conduits 80, 80' sont branchés par des raccords en "T" 81, 81' respectivement aux conduits 50-51 et 50'-51'.

Dans la position de la figure 2, au cours de laquelle le mécanisme de distribution n'est pas utilisé, la valve 8 est fermée et le circuits de commande, aussi bien du moteur 5 que du vérin 6, sont isolés de la source **S**.

Lorsque l'opérateur souhaite procéder au déchargement latéral du produit contenu dans la benne, il actionne la valve 8 dans une position d'ouverture amenant du liquide haute pression au moteur 5 dans un sens tel que la vis repousse le produit vers la face de déchargement 14 de la benne. Nous supposons qu'il s'agit de l'état illustré à la figure 3A. Le branchement des conduits 51, 51' sont tels que lorsque la valve se trouve dans cet état, le vérin 6 est sollicité dans le sens de son extension (flèche **F**).

Il convient de noter que la vis est naturellement soumise à un couple résistant, dû à son inertie élevée, ainsi qu'à la pression et aux frottements des produits contenus dans la benne. C'est pourquoi, lors du démarrage, au cours duquel se fait la montée en pression du liquide hydraulique, le vérin 6 se met en mouvement avant le moteur 5.

A titre indicatif, le vérin est actionné lorsque la pression du circuit atteint 50 bars alors que le moteur se met en route seulement lorsque la pression atteint 80 bars.

Il y a donc un décalage des mouvements, ce qui assure que la trappe 3 est ouverte lorsque commence la sortie des produits. Il n'y a donc pas de pression anormale des produits contre la trappe.

Comme déjà dit plus haut, l'extension de la goulotte 4 se fait conjointement à l'ouverture de la trappe 3.

Lorsque la distribution du produit est terminée, l'opérateur fait basculer la valve dans la position de la figure 3B, inversant les branchements à la haute et à la basse pression.

Ainsi, il se produit une rétraction du vérin 6, suivie d'un changement de sens de rotation du moteur 5, et donc de la vis 2.

On provoque ainsi la fermeture de la trappe 3 et l'escamotage de la goulotte 4, tandis que cesse la distribution du produit.

En référence aux figures 2A et 2B, on va maintenant expliquer le rôle de la valve à étranglement unidirectionnelle 500 qui est avantageusement (mais non obligatoirement) utilisée. Elle est montée sur le conduit 50.

Son rôle est de rendre encore plus sûre la fermeture complète de la trappe en augmentant l'effort développé par le vérin 6 pour commander cette fermeture.

La figure 2A représente l'état naturel de la valve 500, qui autorise le libre passage du liquide hydraulique venant du moteur 5 (et retournant à la source S) dans le conduit 50, de la gauche vers la droite sur la figure. Dans cet état, qui correspond à l'état de la valve 8 représenté sur la figure 3A, on réalise l'entraînement de la vis d'Archimède dans le sens de la distribution, vanne 3 ouverte (vérin 6 en extension).

Si on actionne le moteur 5 en sens inverse, en amenant la valve 8 à l'état de la figure 3B, le sens de circulation du liquide hydraulique dans le conduit 50 est inversé (haute pression côté droit). Or la valve 500 interdit normalement le passage dans ce sens. Il se développe alors une pression importante (côté droit) qui fait basculer la valve, à l'encontre de son ressort de rappel, dans la position de la figure 2B. Le passage du liquide devient dès lors possible, mais à travers un étranglement, ce qui accroît la pression du fluide côté droit (en amont de la valve 500). Cette pression élevée se retrouve dans le conduit 51 qui commande la rétraction du vérin 6 pour fermer la trappe 3. Celle-ci est donc soumise à une force élevée dans le sens de la fermeture, ce qui limite le risque d'une fermeture incomplète, même s'il y a des matières à l'aplomb du volet, comme c'est le cas pour une distribution partielle. Le volet cisaille alors les matières restantes pour s'appliquer par son bord inférieur, de manière étanche, contre le fond de benne.

Le second mode de réalisation, qui est illustré à la figure 5, se distingue du premier par le fait que le levier coudé 7, qui commande le mouvement de la goulotte 4, est actionné directement par un vérin distinct 9. Il s'agit d'un vérin hydraulique à double effet alimenté par des conduits 90, 90' dérivés des conduits 51, 51' respectivement.

La tige du vérin 9 agit sur le levier 7 de telle manière que c'est sa rétraction - symbolisée par la flèche **J** - qui provoque l'extension **G** de la goulotte 4. Les branchements des conduits 90 et 90' sur les conduits 51, 51' sont donc tels que la mise en extension du vérin 6 corresponde à la rétraction du vérin 9, et vice versa.

Dans ce mode de réalisation, il y a donc une commande hydraulique directe et simultanée de la vis d'extractation 2, de la trappe coulissante 3 et de la goulotte télescopique 4.

Le circuit hydraulique de ce mode de réalisation pourrait être également équipé, bien entendu, de la valve à étranglement unidirectionnelle 500 prévue dans le premier mode de réalisation.

On notera que l'ensemble de ces commandes s'obtient par pilotage par l'opérateur d'un distributeur hydraulique unique, en l'occurrence celui qui équipe le tracteur.

Au lieu de prévoir un réglage discontinu de la course d'ouverture de la trappe, tel que celui constitué par la coopération de la barrette 67 avec la série de trous 66, on pourrait prévoir un réglage continu, par exemple au moyen d'un système vis/écrou.

## Revendications

1. Benne réceptrice et distributrice de produits en vrac, dont le fond (10) est équipé d'une vis d'Archimède (2) animée en rotation par un moteur hydraulique (5) à double sens de rotation, apte à entraîner les produits latéralement et les décharger hors de la benne à travers une ouverture (15) ménagée dans l'une (14) de ses faces latérales, caractérisée par le fait qu'elle comporte une trappe (3) d'obturation de ladite ouverture (15), qui est également commandée par des moyens hydrauliques (6), et que les circuits hydrauliques alimentant ledit moteur (5) et lesdits moyens (6) de commande de la trappe (3) sont asservis l'un à l'autre de telle sorte que l'actionnement de la vis (2) dans le sens du déchargement provoque automatiquement l'ouverture de la trappe (3), tandis que son actionnement en sens inverse en provoque la fermeture, cette trappe (3) consistant en un volet qui est monté coulissant dans le plan - ou sensiblement dans le plan - de ladite face latérale (14) de la benne, et dont la course d'ouverture est réglable.

2. Benne selon la revendication 1, caractérisée par le fait que les conduits hydrauliques (50-50') alimentant le moteur et les conduits hydrauliques (51-51') alimentant les moyens (6) de commande de la trappe (3) sont pilotés par une valve unique à trois positions (8).

3. Benne selon l'une des revendications 1 ou 2, caractérisée par le fait que les moyens (6) de commande de la trappe consistent en un vérin hydraulique à double effet.

4. Benne selon les revendications 2 et 3 prises en combinaison, caractérisée par le fait que l'un (50) des conduits hydrauliques alimentant le moteur comporte une valve à étranglement unidirectionnelle (500) apte à engendrer une augmentation de la pression dans le vérin (6), dans le sens de la fermeture de la trappe (3), lors de l'actionnement de la vis (2) en sens inverse de celui du déchargement.

5. Benne selon l'une des revendications 1 à 4, caractérisée par le fait qu'elle comporte une goulotte de déversement (4) télescopique, extensible latéralement, dont la commande dans le sens (G) de l'extension est asservie à l'ouverture (H) de la trappe, et inversement.

6. Benne selon la revendication 5, caractérisée par le fait que la commande de la goulotte (4) est réalisée mécaniquement, par des organes de transmission de mouvement reliés aux organes d'actionnement de la trappe (3).

7. Benne selon la revendication 5, caractérisée par le fait que la goulotte (4) est commandée par un vérin hydraulique (9) alimenté par le circuit hydraulique commandant la trappe (3).
